(19) Europäisches Patentamt
European Patent Office
Office européen des brevets

(11) EP 4 383 135 A1

(12) EUROPEAN PATENT APPLICATION

(43) Date of publication:
**12.06.2024 Bulletin 2024/24**

(21) Application number: **23209679.2**

(22) Date of filing: **14.11.2023**

(51) International Patent Classification (IPC):
**G06N 3/0455** (2023.01)    **G06N 3/088** (2023.01)
**G06N 3/084** (2023.01)    **G06N 3/0475** (2023.01)
**G06N 3/0442** (2023.01)    **G06N 3/0464** (2023.01)

(52) Cooperative Patent Classification (CPC):
**G06N 3/0455; G06N 3/0475; G06N 3/084;
G06N 3/088;** G06N 3/0442; G06N 3/0464

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.12.2022 KR 20220167510**

(71) Applicants:
• **Samsung SDS Co., Ltd.**
**Seoul (KR)**
• **Yonsei University, University-Industry
Foundation(UIF).**
**Seoul 03722 (KR)**

(72) Inventors:
• **Park, Se Won**
**Seoul (KR)**
• **Kim, Min Jung**
**Seoul (KR)**
• **Park, No Seong**
**Seoul 05265 (KR)**
• **Lim, Hak Soo**
**Incheon 22003 (KR)**

(74) Representative: **Glawe, Delfs, Moll
Partnerschaft mbB von
Patent- und Rechtsanwälten
Postfach 13 03 91
20103 Hamburg (DE)**

(54) **METHOD FOR GENERATING TIME SERIES DATA AND SYSTEM THEREFOR**

(57) Provided are a method for generating time series data and system therefor. The method according to some embodiments may include obtaining an autoencoder trained using original time series data, wherein the autoencoder includes an encoder and a decoder, obtaining a score predictor trained using latent vectors of original time series data generated through the encoder, extracting a plurality of noise vectors from a prior distribution, generating a plurality of synthetic latent vectors by updating the plurality of noise vectors using scores of the plurality of noise vectors predicted through the score predictor, and reconstructing the plurality of synthetic latent vectors into a plurality of synthetic time series samples through the decoder and outputting the plurality of synthetic time series samples.

FIG. 1

**Description**

## BACKGROUND

### 1. Field

The present disclosure relates to a method and system for generating time series data, and more specifically, it relates to a method and system for generating synthetic time series data having similar characteristics to given original time series data.

### 2. Description of the Related Art

Synthetic data generation technology refers to a technology that generates synthetic data, which is virtual data with similar statistical or probabilistic characteristics to original data. Recently, as global regulations on information protection have been strengthened, synthetic data generation technology has been receiving great attention as a way to protect sensitive personal information.

Meanwhile, in various fields such as finance, medicine, and marketing, sensitive information often takes the form of time series data. Accordingly, research is continuously being conducted to apply existing synthetic data generation technology to time series data. Additionally, as a result of this research, a method of generating synthetic time series data using GAN (Generative Adversarial Network), a type of generative model such as 'TimeGAN,' has been proposed.

However, the proposed method has a clear limitation in that it may not guarantee the quality of the generated synthetic time series data due to the chronic training instability problem resulting from the adversarial training structure.

## SUMMARY

The technical problem to be solved through some embodiments of the present disclosure is to provide a method for generating high-quality synthetic time series data with similar characteristics to original time series data and a system for performing the method.

Another technical problem to be solved through some embodiments of the present disclosure is to provide a method for generating high-quality synthetic time series data even from high-dimensional original time series data and a system for performing the method.

Another technical problem to be solved through some embodiments of the present disclosure is to provide a method for generating high-quality synthetic time series data using a score-based generative model (e.g., score predictor), and a system for performing the method.

Another technical problem to be solved through some embodiments of the present disclosure is to provide a method for accurately training a score-based generative model (e.g., score predictor) for time series data and a system for performing the method.

The technical problems of the present disclosure are not limited to the technical problems mentioned above, and other technical problems not mentioned may be clearly understood by those skilled in the art from the description below.

According to some embodiments of the present disclosure, there is provided a method for generating time series data performed by at least one computing device. The method may include: obtaining an autoencoder trained using original time series data, wherein the autoencoder includes an encoder and a decoder; obtaining a score predictor trained using latent vectors of original time series data generated through the encoder; extracting a plurality of noise vectors from a prior distribution; generating a plurality of synthetic latent vectors by updating the plurality of noise vectors using scores of the plurality of noise vectors predicted through the score predictor; and reconstructing the plurality of synthetic latent vectors into a plurality of synthetic time series samples through the decoder and outputting the plurality of synthetic time series samples.

In some embodiments, the score predictor may be configured to further receive a latent vector at a previous time point in addition to a latent vector at a current time point and predict a score for the latent vector at the current time point.

In some embodiments, the generating the plurality of synthetic latent vectors may include: updating a first noise vector to generate a first synthetic latent vector, wherein the first synthetic latent vector is a vector at a time point before a second synthetic latent vector; inputting a second noise vector and the first synthetic latent vector into the score predictor to predict a score of the second noise vector; and generating the second synthetic latent vector by updating the second noise vector based on the score of the second noise vector.

In some embodiments, the score predictor may be trained based on a difference between a predicted score for noisy vectors generated by adding noise to the latent vectors and a value calculated by Equation 1 below,

[Equation 1]
$$\nabla_{h_t^s} log\, p(h_t^s | h_t^0)$$
,

wherein $h_t^0$ means a latent vector at a t-th time point, $h_t^s$ means a noise vector generated by adding noise to the latent vector at the t-th time point, $log\, p(h_t^s | h_t^0)$ means a log probability density of $h_t^s$ for $h_t^0$, and $\nabla_{h_t^s}$ means a gradient.

In some embodiments, the encoder or the decoder may be implemented as a RNN (Recurrent Neural Network)-based neural network.

In some embodiments, the encoder or the decoder may be implemented as a transformer-based neural network.

In some embodiments, the score predictor may be implemented as a CNN (Convolutional Neural Network)-based neural network performing an 1D convolution operation.

In some embodiments, the score predictor may be implemented based on a neural network of a U-Net structure.

In some embodiments, the original time series data may include real-world data, and the method further may include: replacing the real-world data with the plurality of synthetic time series samples or transforming the real-world data using the plurality of synthetic time series samples.

According to another embodiments of the present disclosure, there is provided a system for generating time series data. The system may include: on or more processors; and a memory configured to store one or more instructions, wherein the one or more processors, by executing the stored one or more instructions, perform operations including: obtaining an autoencoder trained using original time series data, wherein the autoencoder includes an encoder and a decoder; obtaining a score predictor trained using latent vectors of original time series data generated through the encoder; extracting a plurality of noise vectors from a prior distribution; generating a plurality of synthetic latent vectors by updating the plurality of noise vectors using scores of the plurality of noise vectors predicted through the score predictor; and reconstructing the plurality of synthetic latent vectors into a plurality of synthetic time series samples through the decoder and outputting the plurality of synthetic time series samples.

In some embodiments, the score predictor may be configured to further receive a latent vector at a previous time point in addition to a latent vector at a current time point and predict a score for the latent vector at the current time point.

In some embodiments, the generating the plurality of latent potential vectors may include: updating a first noise vector to generate a first synthetic latent vector, wherein the first synthetic latent vector is a vector at a time point before a second synthetic latent vector; inputting a second noise vector and the first synthetic latent vector into the score predictor to predict a score of the second noise vector; and generating the second synthetic latent vector by updating the second noise vector based on the score of the second noise vector.

In some embodiments, the score predictor may be trained based on a difference between a predicted score for noisy vectors generated by adding noise to the latent vectors and a value calculated by Equation 1 below,

[Equation 1]
$$\nabla_{h_t^s} log\, p(h_t^s | h_t^0)$$

wherein $h_t^0$ means a latent vector at a t-th time point, $h_t^s$ means a noise vector generated by adding noise to the latent vector at the t-th time point, $log\, p(h_t^s | h_t^0)$ means a log probability density of $h_t^s$ for $h_t^0$, and $\nabla_{h_t^s}$ means a gradient.

In some embodiments, the score predictor may be implemented as a CNN (Convolutional Neural Network)-based neural network performing an 1D convolution operation.

In some embodiments, the score predictor may be implemented based on a neural network of a U-Net structure.

In some embodiments, the original time series data may include real-world data, and the operations further may include: replacing the real-world data with the plurality of synthetic time series samples or transforming the real-world data using the plurality of synthetic time series samples.

According to yet another embodiments of the present disclosure, there is provided a computer program stored in a computer-readable recording medium. The computer program may be combined with a computing device to perform steps including: obtaining an autoencoder trained using original time series data, wherein the autoencoder includes an encoder and a decoder; obtaining a score predictor trained using latent vectors of original time series data generated through the encoder; extracting a plurality of noise vectors from a prior distribution; generating a plurality of synthetic latent vectors by updating the plurality of noise vectors using scores of the plurality of noise vectors predicted through the score predictor; and reconstructing the plurality of synthetic latent vectors into a plurality of synthetic time series samples through the decoder and outputting the plurality of synthetic time series samples.

## BRIEF DESCRIPTION OF THE DRAWINGS

These and/or other aspects will become apparent and more readily appreciated from the following description of the embodiments, taken in conjunction with the accompanying drawings in which:

FIG. 1 is an example diagram schematically illustrating the operation of a time series data generation system according to some embodiments of the present disclosure;
FIGS. 2 and 3 are example diagrams for describing the concept of a score and the operating principle of a score-based generative model that may be referenced in some embodiments of the present disclosure;
FIG. 4 is an example diagram showing the overall structure of a score-based generative model according to some embodiments of the present disclosure;
FIG. 5 is an example diagram for describing the structure and operation of an encoder according to some embodiments of the present disclosure;
FIG. 6 is an example flowchart schematically showing a method for generating time series data according to some embodiments of the present disclosure;
FIG. 7 is an example diagram for further describing the autoencoder training step S61 shown in FIG. 6;
FIG. 8 is an example flowchart showing a detailed process of the score predictor training step S62 shown in FIG. 6;
FIG. 9 is an example diagram for describing the structure and operation of a score predictor according to some embodiments of the present disclosure;
FIG. 10 is an example flowchart showing a detailed process of the synthetic time series data generation step S63 shown in FIG. 6;
FIGS. 11 and 12 are example diagrams for further describing the process of generating a synthetic time series sample according to some embodiments of the present disclosure;
FIG. 13 shows performance test results for a time series data generation method according to some embodiments of the present disclosure; and
FIG. 14 illustrates an example computing device that may implement a time series data generation system according to some embodiments of the present disclosure.

## DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, various embodiments of the present disclosure will be described in detail with reference to the attached drawings.

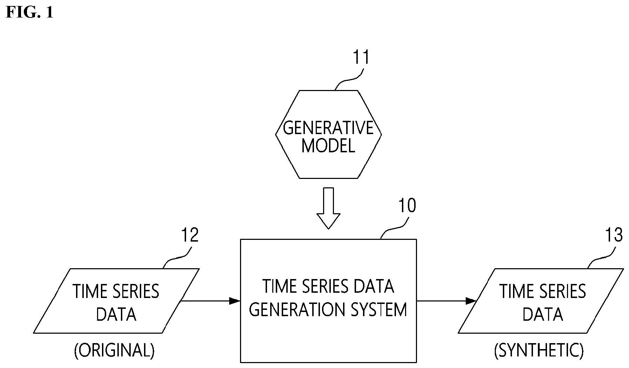

FIG. 1 is an example diagram schematically illustrating the operation of the time series data generation system 10 according to some embodiments of the present disclosure.

As shown in FIG. 1, the time series data generation system 10 could be a system that may generate synthetic time series data 13 with similar characteristics (e.g., statistical and probabilistic characteristics) as the original time series data 12. Specifically, the time series data generation system 10 may generate synthetic time series data 13 having similar characteristics to the original time series data 12 using a score-based generative model 11. Hereinafter, for convenience of description, the time series data generation system 10 will be abbreviated as 'generation system 10.'

Time series data (e.g., 12, 13) may be composed of a plurality of time series samples (i.e., data samples). Here, 'sample' may refer to each individual data. For example, a time series sample may refer to a sample corresponding to a specific time point or a specific time interval (e.g., data measured/collected at a specific time point). For reference, in this technical field, 'sample' may be used interchangeably with terms such as 'instance,' 'observation,' and 'individual data.'

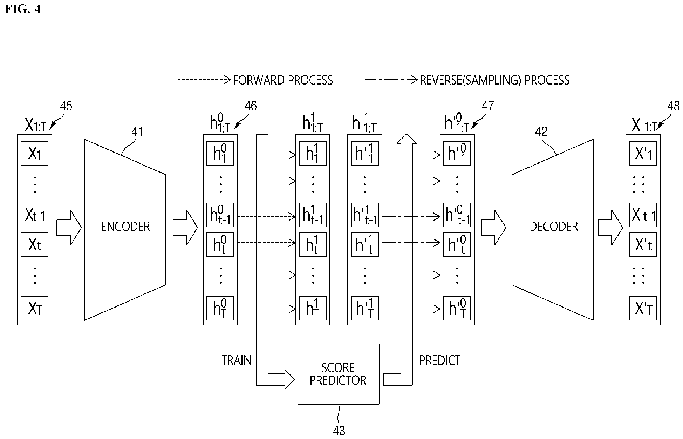

More specifically, the generation system 10 may train the score-based generative model 11 using the original time series data 12. For example, the generation system 10 may train a score predictor/estimator constituting the score-based generative model 11 using the original time series data 12. Additionally, the generation system 10 may generate synthetic time series data 13 using the score predicted through the trained generative model 11. In this regard, it will be described in detail with reference to the drawings in FIG. 4 and other drawings.

In some embodiments, the generation system 10 may replace at least a portion of the original time series data 12 with the synthetic time series data 13 or transform at least a portion of the original time series data 12 using the synthetic time series data 13. For example, when the original time series data 12 includes real-world data (e.g., personal sensitive information, etc.) with information protection issues, the generation system 10 may replace the real-world data with synthetic time series data 13 or transform the real-world data using synthetic time series data 13. By doing so, information protection issues may be resolved and information security may be improved.

In some embodiments, the generation system 10 may provide a synthetic time series data generation service. For example, the generation system 10 may receive original time series data 12 from a customer (e.g., user, company), and generate and provide synthetic time series data 13 having similar characteristics to the received data. Then, the customer may take steps to protect real-world data (e.g., sensitive information) existing in the original time series data 12 using the synthetic time series data 13. For example, a customer may replace the real-world data existing in the original time series data 12 with the synthetic time series data 13 or transform the real-world data using the synthetic time series data 13.

The generation system 10 may be implemented with at least one computing device. For example, all of the functionality of the generation system 10 may be implemented in a single computing device, or a first functionality of the generation system 10 may be implemented in a first computing device and a second functionality may be implemented in a second computing device. Alternatively, certain functionality of the generation system 10 may be implemented in multiple computing devices.

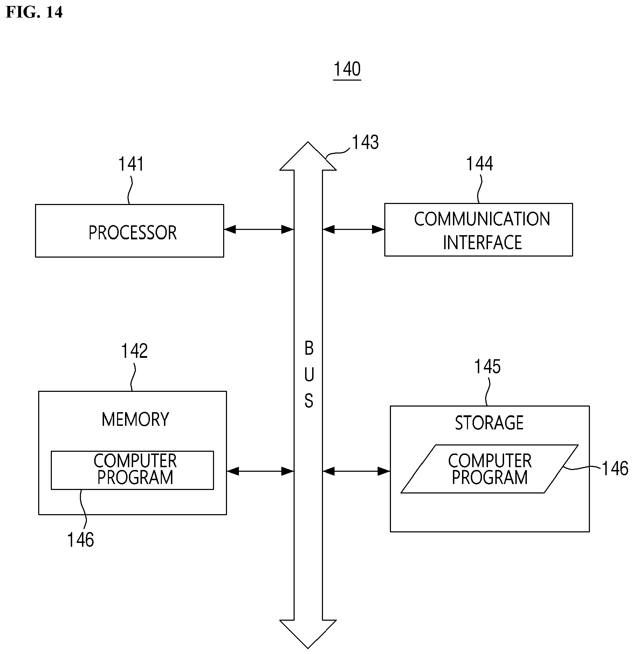

The computing device may encompass all types of devices equipped with computing functions, and an example of such devices is shown in FIG. 14.

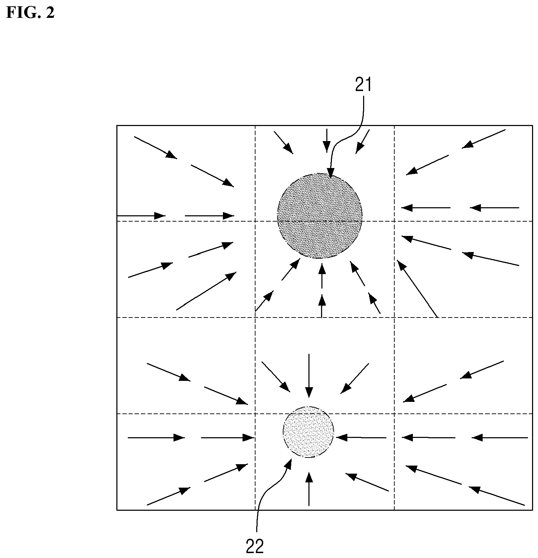

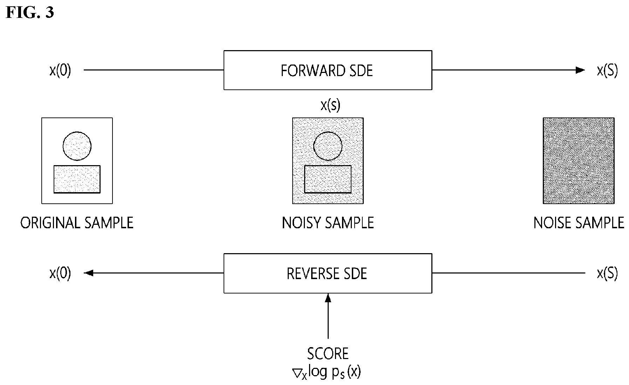

So far, the operation of the generation system 10 according to some embodiments of the present disclosure has been schematically described with reference to FIG. 1. Hereinafter, for convenience of understanding, the operating principle of the score-based generative model and the concept of the score that may be referenced in some embodiments of the present disclosure will be briefly described with reference to FIGS. 2 and 3.

A score-based generative model refers to a model that may generate a synthetic sample (data) using a score, and the score may refer to a value representing the gradient (i.e., gradient vector) for data density. For example, the score may be a value calculated by differentiating the log probability density function (or log likelihood) for the data *(see equation in FIG. 3)*.

The reasons for using scores to generate synthetic samples are as follows. Since the direction of the gradient vector with respect to data density indicates the direction, in which data density increases, the score allows generating (sampling) a synthetic sample in an area with high data density (i.e., the score allows the sampling point to be easily moved to a high-density area), and the synthetic samples generated in this way have very similar characteristics to the real-world samples (data). This is because an area with high data density in the data space means an area where real-world samples are concentrated. For example, FIG. 2 shows a relatively dense region 21, 22 and a score *(see* arrow) in data space, and it may be seen that when moving along the direction of the score at a certain point, the relatively dense region 21, 22 may be reached.

For reference, 'synthetic sample' may be used interchangeably with terms such as 'synthetic sample,' 'fake sample,' and 'virtual sample' in the technical field.

In a score-based generative model, prediction of the score described above may be performed by a score predictor with learnable parameters. The score predictor is a model that predicts the score for input samples (data), and may be implemented, for example, as a neural network of various structures.

A general score predictor may be trained using samples of the original data (set) (i.e., original samples), and more precisely, it may be trained using noisy samples generated from samples of the original data (set). Here, a noisy sample may refer to a sample generated by adding noise (e.g., Gaussian noise) with a prior (or known) distribution (e.g., normal distribution) to the original sample. For reference, if noise is continuously added to the original sample, the original sample will be transformed to be almost similar to or identical to the noise sample, so the noisy sample may conceptually encompass the noise sample. In some cases, 'noisy sample' may be used interchangeably with terms such as 'transformed sample.'

The reason for adding noise to the original sample may be understood as preventing the score prediction accuracy from decreasing in regions with low data density and simplifying the loss function of the score predictor to facilitate training of the score predictor. To elaborate, since the correct score (or distribution) of the original samples is unknown, it may be understood that training is performed by indirectly predicting the score of the noisy sample, to which noise with a prior distribution has been added. An example of such a technique is the 'denoising score matching technique.' Those skilled in the relevant technical field are already familiar with the denoising score matching technique, so description thereof is omitted.

The process of adding noise to the original sample may be modeled continuously or discretely.

For example, as shown in FIG. 3, the noise addition process may be modeled in a continuous form using a stochastic differential equation (SDE) (see Forward SDE process). In FIG. 3, 's' means a time step or time variable, 'x(s)' means a noisy sample of the 's'-th time step (or time point), and 'x(0)' refers to the original sample. As shown, the original sample (see 'x(0)') may be gradually noiseized by adding noise, and finally converted to a noisy (or noise) sample (see 'x(S)') with a prior distribution. And, various noisy samples generated up to the 'S'-th time step (or time point) may be used to train the score predictor. Those skilled in the relevant technical field are already familiar with the stochastic differential equations used in score-based generative models, so detailed descriptions thereof are omitted.

As another example, the noise addition process may be modeled in a form (i.e., a discrete form) that adds noise of a specified scale step by step (gradually).

The synthetic sample generation process using the score predictor may be performed together with the noise removal process. For example, referring again to FIG. 3, the synthetic sample generation process may be understood as gradually removing noise from the noisy (or noise) sample (see 'x(S)') of the prior distribution using the score predicted through the score predictor, and updating noisy (or noise) samples to have the distribution of the original samples (see reverse SDE process). For this purpose, MCMC (Markov Chain Monte Carlo) technique, Euler-Maruyama solver, predictor-corrector technique, etc. may be used. However, the scope of the present disclosure is not limited thereto. To explain further, the synthetic sample may be understood as being generated by repeatedly performing the process of updating the noisy sample to a region with high data density using the predicted score and the process of removing the noise.

Those skilled in the relevant technical field are already familiar with the operating principles and training methods of the score-based generative model, so further detailed descriptions are omitted.

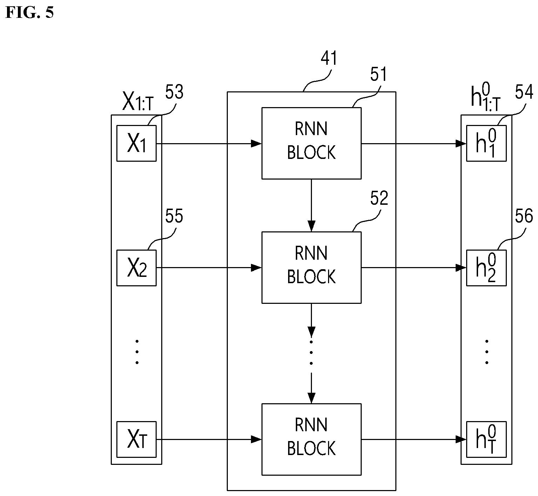

So far, the operating principle of the score-based generative model and the concept of the score have been briefly described with reference to FIGS. 2 and 3. Hereinafter, a score-based generative model (e.g., 11 in FIG. 1) according to some embodiments of the present disclosure will be briefly described with reference to FIGS. 4 and 5.

FIG. 4 illustrates an example structure of a score-based generative model (e.g., 11 in FIG. 1) according to some embodiments of the present disclosure.

As shown in FIG. 4, the score-based generative model according to embodiments may be configured to include an autoencoder (see 41 and 42) and a score predictor 43. For reference, FIG. 4 shows the basic structure of an autoencoder as an example, but the scope of the present disclosure is not limited thereto, and the structure of the autoencoder applied to the score-based generative model may be partially modified.

An autoencoder refers to a neural network with an encoder-decoder structure used to learn a low-dimensional manifold or a latent representation that well reflects the characteristics of the data. The reason for introducing an autoencoder is that higher quality synthetic time series data may be generated by generating score-based synthetic samples (e.g., synthetic latent vectors) using a latent space that well reflects the characteristics of time series data. In other words, it is advantageous in terms of performance to generate a synthetic latent vector that well reflects the characteristics of the original time series data based on the score in a low-dimensional latent space and decode it to generate a high-dimensional synthetic time series sample. In addition, an additional advantage may be secured in that, even if the number of dimensions of each time series sample constituting the original time series data increases, the quality of the synthetic time series data does not significantly deteriorate. Furthermore, computing costs and time costs required for training the score predictor 43 may also be reduced.

Hereinafter, each component of the score-based generative model will be briefly described. However, since those skilled in the relevant technical field are already familiar with the operating principles of the autoencoder, a detailed description of the autoencoder itself is omitted.

The encoder 41 may refer to a module that converts time series data 45 into a latent vector 46. For example, the encoder 41 may generate T latent vectors 46 by encoding T time series samples 45 together. Alternatively, the encoder 41 may be configured to generate T latent vectors 46 by encoding each of the T time series samples 45 (that is, receiving samples one at a time and repeatedly encoding them).

The encoder 41 may be implemented as various types of neural networks. For example, the encoder 41 may be implemented as a neural network based on Recurrent Neural Networks (RNN) (e.g., LSTM, GRU, etc.) or based on a transformer (e.g., self-attention-based neural network that receives a sequence). However, the scope of the present disclosure is not limited thereto.

In some embodiments, as shown in FIG. 5, the encoder 41 may be implemented as an RNN-based neural network. For example, the encoder 41 may be configured to comprise a plurality of RNN blocks (*see* 51, 52), and time series samples (*see* 53, 55) may be input to each RNN block (e.g., 51). In this case, a latent vector at the current time point may be generated by comprehensively considering information of time series samples at the previous time point. For example, since the RNN block 52 analyzes the latent vector 54 at the first time point and the time series sample 55 at the second time point to generate the latent vector 56 at the second time point (i.e., the latent vector at the current time point is output in an autoregressive manner), the latent vector 56 contains information about the time series sample 53 at the previous time point.

Next, the decoder 42 may refer to a module that reconstructs the input latent vectors 47 into synthetic time series data 48 and outputs them. For example, the decoder 42 may decode T latent vectors to generate T synthetic time series samples 48 (e.g., decode together, decode one by one).

The decoder 42 may also be implemented as various types of neural networks. For example, the decoder 42 may also be implemented as a neural network based on RNN (e.g., LSTM, GRU, etc.) or a transformer (e.g., self-attention-based neural network that receives a sequence). However, the scope of the present disclosure is not limited thereto.

In some embodiments, the decoder 42 may also be implemented as an RNN-based neural network. For example, the decoder 42 may be configured to include a plurality of RNN blocks (*see* 51 and 52 in FIG. 5), and latent vectors may be input to each RNN block. In this case, the synthetic time series sample at a current time point may be generated by comprehensively considering the information of the time series sample at the previous time point (e.g., when the RNN block receives the time series sample at the previous time point and the latent vector at the current time point and performs decoding in an autoregressive manner).

Next, the score predictor 43 may refer to a module that predicts the score for the input latent vector. For example, the score predictor 43 may be trained by performing a forward SDE process (*see* the forward process in FIG. 4) on the latent vectors 46 generated through the encoder 41. Additionally, the synthetic latent vectors 47 may be generated by performing a Reverse SDE process (*see* Reverse process in FIG. 4) using the prediction score output from the trained score predictor 43.

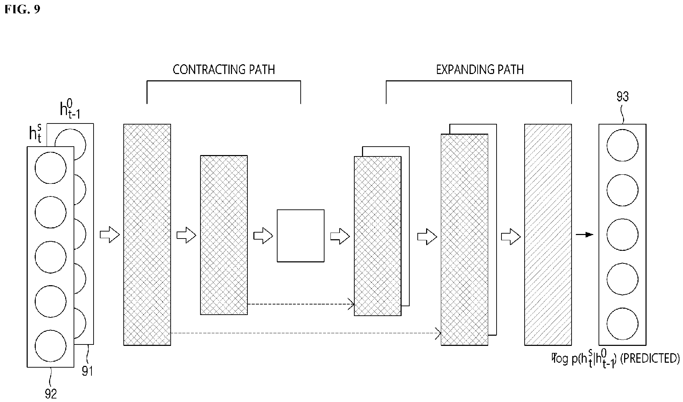

The score predictor 43 may be implemented as various types of neural networks. For example, the score predictor 43 may be implemented as a neural network based on CNN (Convolutional Neural Network) or ANN (Artificial Neural Network). As a more specific example, the score predictor 43 may be implemented as a neural network with a U-Net structure (*see* FIG. 9). However, the scope of the present disclosure is not limited thereto. U-Net refers to a U-shaped neural network that has a contracting path (or encoder) and an expanding path (or decoder) and a skip-connection between the two paths. Those skilled in the technical field are already familiar with the detailed structure and operating principles of U-Net, so description of this is omitted.

In some embodiments, the score predictor 43 may be configured to predict a conditional score for a latent vector at a previous time point. For example, when predicting a score for a latent vector at the current time point, the score predictor 43 may be configured to further receive a latent vector at a previous time point and perform prediction. In this case, the score (i.e., conditional score) of the latent vector at the current time point with respect to the latent vector at the previous time point may be predicted. In this regard, the description of FIG. 9 may be further referenced.

The structure and training method of the score predictor 43 will be further described later.

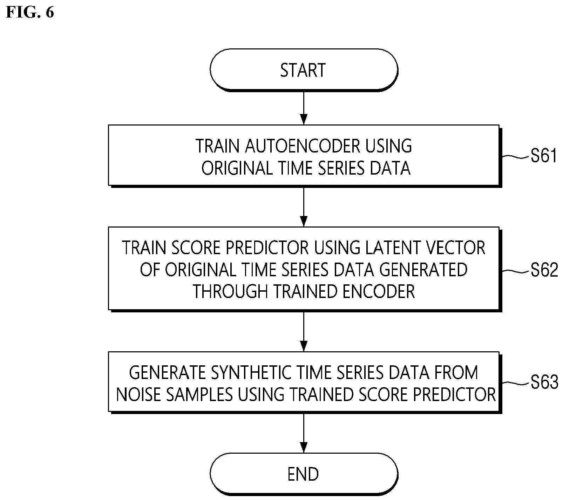

So far, the score-based generative model according to some embodiments of the present disclosure has been briefly described with reference to FIGS. 4 and 5. Hereinafter, a time series data generation method that may be performed using the score-based generative model described above will be described with reference to the drawings in FIG. 6 and other drawings.

Hereinafter, in order to provide convenience of understanding, the description will be continued assuming that all steps/operations of the methods to be described later are performed in the above-described generation system 10. Accordingly, when the subject of a specific step/operation is omitted, it may be understood as being performed in the generation system 10. However, in a real environment, some steps/operations of the methods to be described later may be performed on other computing devices. For example, training about a score predictor, etc. may be performed on a separate computing device.

In addition, hereinafter, for convenience of understanding, the description continues assuming that the time series data input to the encoder 41 or output from the decoder 42 is composed of 'T' (where T is a natural number of 2 or more) time series samples, and the noise addition/removal process is modeled using the SDE method.

FIG. 6 is an example flowchart schematically showing a method for generating time series data according to some embodiments of the present disclosure. However, this is only a preferred embodiment for achieving the purpose of the present disclosure, and some steps may be added or deleted as needed.

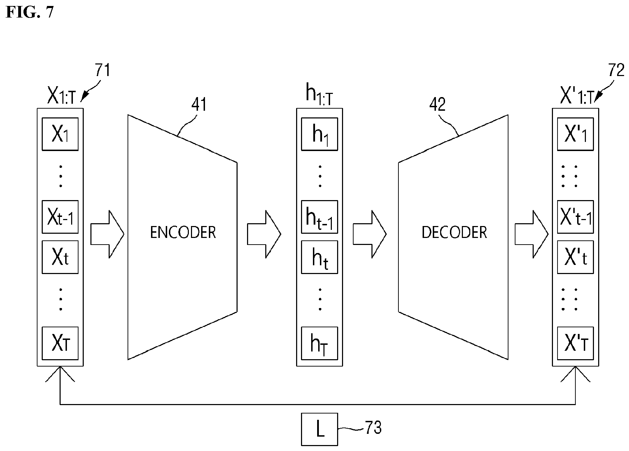

As shown in FIG. 6, the method for generating time series data according to embodiments may begin at step S61 of training an autoencoder using original time series data. For example, as shown in FIG. 7, the generation system 10 may update the weight parameters of the encoder 41 and the decoder 42 based on the reconstruction loss 73 representing the difference between the original time series data 71 (i.e., T time series samples) input to the encoder 41 and the time series data 72 (i.e., T time series samples) output from the decoder 42. As this process is repeatedly performed on multiple original time series data, the autoencoder learns a latent representation (or space) that well reflects the characteristics of the original time series data.

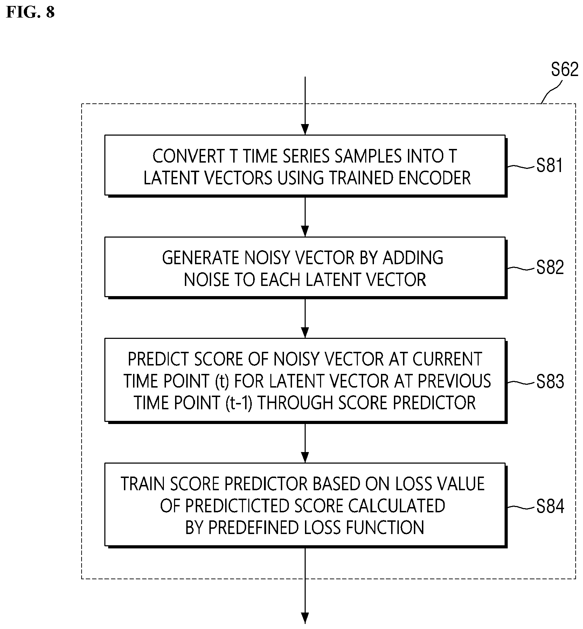

In step S62, a score predictor may be trained using latent vectors of the original time series data generated through the trained encoder. The original time series data in this step may or may not be the data used in training the autoencoder. The detailed process of this step is shown in FIG. 8. Hereinafter, description will be made with reference to FIG. 8.

As shown in FIG. 8, T time series samples constituting the original time series data may be converted into T latent vectors through the encoder trained first (S81).

In step S82, a noisy vector may be generated by adding noise to each latent vector. For example, the generation system 10 may add prior distribution noise (e.g., Gaussian noise) to each latent vector. This step may be understood as a step corresponding to the Forward SDE process described above, and noise may be added repeatedly until predefined conditions are satisfied (e.g., if the maximum time step of the Forward SDE process is set to '100,' the noise addition process is repeated 100 times).

The forward SDE process may be performed, for example, based on the SDE described in Equation 1 below. In Equation 1 below, 's' refers to the time step or time variable of the Forward SDE process, and 't' refers to a specific time point (i.e., the t-th time point) of the time series data. And, '$h_t^s$' means the noisy vector of the 's'-th time step (or time point) for the latent vector at the 't'-th time point among T latent vectors. Functions 'f and g' correspond to predefined functions and may be defined in various ways. And, 'w' refers to the Standard Wiener Process and a term expressing randomness.

[Equation 1]

$$dh_t^s = f(s, h_t^s)ds + g(s)dw, t\ in\ [1:T]$$

For additional explanation of the Forward SDE described in Equation 1 (e.g., function 'f,' 'g,' 'w' terms, etc.), the paper titled 'Score-Based Generative Modeling through Stochastic Differential Equations' may be referenced.

In step S83, the score (i.e., conditional score) of the noisy vector at the current time point with respect to the latent vector at the previous time point may be predicted through the score predictor. For example, it is assumed that the generation system 10 generates a noisy vector at the 't'-th time point by adding noise to the latent vector at the 't'-th time point. In this case, the generation system 10 may predict the score of the noisy vector at the 't'-th time point with respect to the latent vector at the 't-1'-th time point through the score predictor 43. To provide convenience of understanding, further explanation will be given with reference to FIG. 9.

FIG. 9 illustrates a case where the score predictor 43 is implemented as a neural network with a U-Net structure, and the dotted arrow indicates a skip connection.

As shown in FIG. 9, the generation system 10 may input the noisy vector 92 at the 't'-th time point together with the latent vector 91 at the 't-1'-th time point into the score predictor 43. Then, a prediction score 93 having the same number of dimensions (i.e., the same number of elements) as the noisy vector 92 may be calculated through the score predictor 43. The two vectors 91 and 92 may be aggregated through an operation such as concatenation and input to the score predictor 43, but the scope of the present disclosure is not limited thereto.

Meanwhile, in some embodiments, the score predictor 43 may be composed of a neural network with a U-Net structure that performs a 1D convolution operation. This is because the data handled by the score predictor 43 is not two-dimensional data such as images, and 1D convolution operation is more suitable than 2D convolution operation for analyzing the time series relationship between input vectors (see 91 and 92).

This will be described again with reference to FIG. 8.

In step S84, a score predictor may be trained based on the loss value of the prediction score calculated by a predefined loss function. For example, the generation system 10 may update the weight parameters of the score predictor 43 based on the loss value calculated by Equation 2 below. Equation 2 below represents the loss function (or objective function) based on the mean square error (MSE) of the prediction score.

In Equation 2 below, 'E' means the expected value, and 'h't' means the noisy vector of the 's'-th time step (or time point) for the latent vector at the 't'-th time point among T latent vectors. And, '$\gamma$' means a positive weighting function, and '$h^0_{t-1}$' and '$h^0_t$' mean the latent vector at the 't-1'-th time point and the latent vector at the 't'-th time point, respectively. And, the 'Me' related term means the prediction score (i.e., the prediction score calculated in step S83), and the 'logp' related term means log probability density of the noise vector at the 't'-th time point with respect to the latent vector at the 't'-th time point (i.e., log probability density for conditional distribution), and '$\nabla$' means gradient.

[Equation 2]

$$L^H_{score} = E_s E_{h^0_{1:T}} \left[ \sum_{t=1}^{T} \lambda(s) E_{h^s_t} \left[ \left\| M_\theta(s, h^s_t, h^0_{t-1}) - \nabla_{h^s_t} logp(h^s_t | h^0_t) \right\|^2_2 \right] \right]$$

For a more detailed explanation of terms such as '$\gamma$,' the paper titled 'Score-Based Generative Modeling through Stochastic Differential Equations' may be referenced.

To provide convenience of understanding, the process by which Equation 2 was derived will be briefly explained.

Equation 3 below is that a loss function used to train a general score trainer through the Forward SDE process (see the above paper) is modified to suit time series data (i.e., to reflect the relationship with the sample at the previous time point). In other words, by changing the term corresponding to the prediction score in the existing loss function to a term related to the conditional score for the samples at the previous time point, and substituting the variable 'x' indicating the sample (data) to '$x_{1:t}$' indicating the time series samples, the following Equation 3 may be derived.

[Equation 3]

$$L_1 = E_s E_{x_{1:T}} \left[ \sum_{t=1}^{T} \lambda(s) l_1(t, s) \right]$$

$$l_1(t, s) = E_{x_t \sim p(x_t | x_{1:t-1})} E_{x^s_{1:t} \sim p(x^s_{1:t} | x_{1:t})} \left[ \left\| M_\theta(s, x^s_{1:t}, x_{1:t-1}) - \nabla_{x^s_{1:t}} logp(x^s_{1:t} | x_{1:t}) \right\|^2_2 \right]$$

Equation 4 below refers to an equation derived by organizing Equation 3 to improve calculation efficiency. Equation 4 represents a loss function that has substantially the same meaning as Equation 3, and the present inventors derive Equation 4 from Equation 3 to improve the point that the loss value is calculated at every 't' time point when using Equation 3.

[Equation 4]

$$L_2 = E_s E_{x_{1:T}} \left[ \sum_{t=1}^{T} \lambda(s) E_{x^s_{1:t} \sim p(x^s_{1:t} | x_{1:t})} \left[ \left\| M_\theta(s, x^s_{1:t}, x_{1:t-1}) - \nabla_{x^s_{1:t}} logp(x^s_{1:t} | x_{1:t}) \right\|^2_2 \right] \right]$$

Finally, the present inventors derived Equation 2, which represents the final loss function, by replacing '$x_{1:t}$' and '$x_{1:t-1}$' in Equation 4 with 'ht' and 'h$_{t-1}$,' respectively. The reason why this is possible is because when encoding is performed as illustrated in FIG. 5, the latent vector 'ht' contains information about the time series samples '$x_{1:t}$.' In conclusion, Equation 2 is a simplified form of Equations 3 and 4, but may be understood as representing a loss function with substantially the same technical meaning.

This will be described again with reference to FIG. 6.

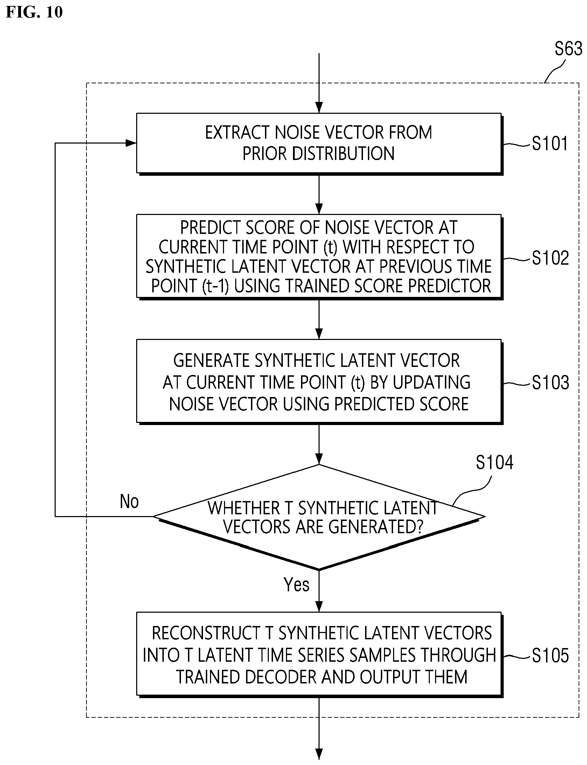

In step S63, synthetic time series data may be generated from the noise samples using the trained score predictor. The detailed process of this step is shown in FIG. 10. Hereinafter, it will be described with reference to FIG. 10.

As shown in FIG. 10, a noise vector (sample) may first be extracted from a prior distribution (e.g., normal distribution) (S101). This is because the process of generating a synthetic latent vector (i.e., sampling process) corresponds to a process of gradually removing noise using scores (*see* Reverse SDE process in FIG. 3).

In step S102, the score of the noise vector at the current time point with respect to the synthetic latent vector at the previous time point may be predicted through the trained score predictor.

In step S103, a synthetic latent vector at the current time point may be generated by updating the noise vector using the predicted score. For example, the generation system 10 may generate a synthetic latent vector at the current time point by removing noise from the noise vector and updating the noise vector using the prediction score. This process may be understood as corresponding to the Reverse SDE process described above, and may be performed repeatedly.

The Reverse SDE process may be performed, for example, based on the SDE described in Equation 5 below. The 'logp' related term in Equation 5 refers to the score, and the generation system 10 may complete the SDE below by substituting the score predicted through the score predictor 43, and generate a synthetic latent vector by solving the SDE below through the predictor-corrector technique. Here, the predictor may mean obtaining the solution (e.g., h$^\mathrm{s}$t) of the SDE through the process of updating the noise vector (e.g., removing noise, etc.) using a solver, and the corrector may mean the process of correcting the updated noise vector by using techniques such as score-based MCMC.

[Equation 5]

$$dh_t^s = [f(s, h_t^s) - g^2(s) \nabla \log p(h_t^s | h_{t-1}^0)]ds + g(s)dw$$

For additional explanation of Reverse SDE described in Equation 5, the paper titled 'Score-Based Generative Modeling through Stochastic Differential Equations' may be referenced.

In step S104, it may be determined whether the generation of T synthetic latent vectors has been completed. If it is not completed, a synthetic latent vector for the next time point may be further generated through steps S101 to S103.

In step S105, T synthetic latent vectors may be reconstructed into T synthetic time series samples through the trained decoder and output.

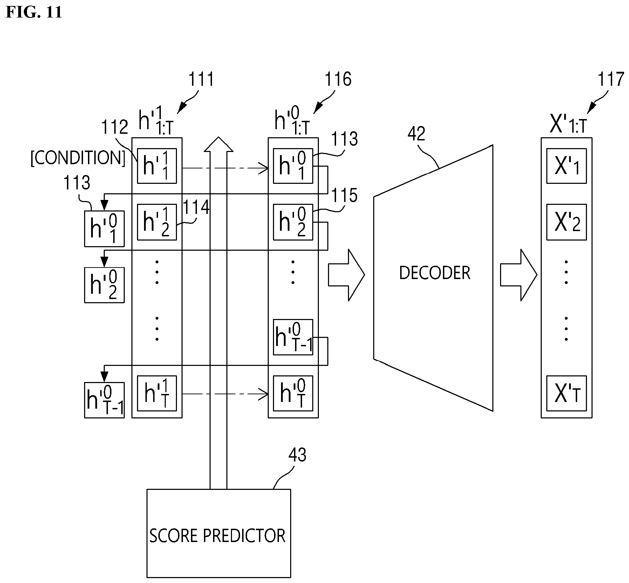

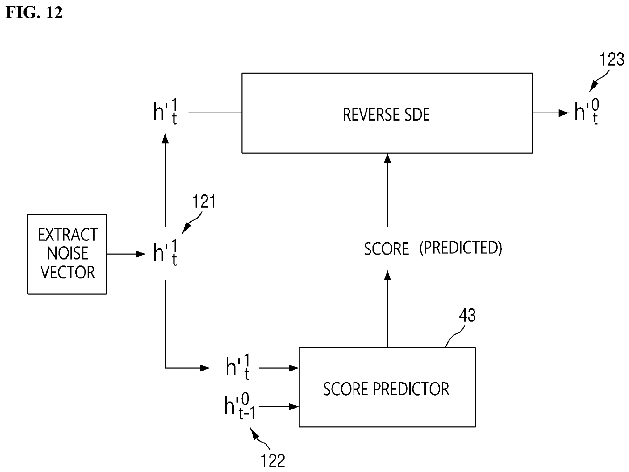

In order to provide easier understanding, the synthetic time series sample generation process corresponding to steps S102 to S105 will be explained in detail with reference to FIGS. 11 and 12.

FIG. 11 illustrates the process, in which synthetic time series data 117 is generated through the trained score predictor 43 and decoder 42. In FIG. 11, T latent vectors 111 mean noise vectors.

As shown in FIG. 11, it is assumed that the generation system 10 extracts the first noise vector 112 from the prior distribution to generate the synthetic latent vector 113 (hereinafter referred to as 'first latent vector') at the first time point. In this case, since there is no synthetic latent vector at the previous time point, the generation system 10 may adjust the size of the first noise vector 112 to fit the input size of the score predictor 43 through a technique such as zero padding. Then, the generation system 10 may input the adjusted first noise vector 112 into the score predictor 43 to predict the score and update the first noise vector 112 using the predicted score to generate latent vector at the first time point 113 (hereinafter referred to as 'first synthetic latent vector').

Next, it is assumed that the generation system 10 extracts the second noise vector 114 from the prior distribution in order to generate the synthetic latent vector 115 at the second time point (hereinafter referred to as 'second latent vector'). In this case, the generation system 10 mat input the first synthetic latent vector 113 and the second noise vector 114 into the score predictor 43 to predict the score (i.e., conditional score). Additionally, the generation system 10 may update the second noise vector 114 using the predicted score to generate a synthetic latent vector 115 at the second time point (hereinafter referred to as a 'second latent vector').

Next, the generation system 10 may repeatedly perform the above-described process until the synthetic latent vector at the T-th time point is generated. For example, as shown in FIG. 12, in the case of generating the synthetic latent vector 123 at the 't'-th time point, the generation system 10 may extract the noise vector 121 from the prior distribution and input the 't-1'-th synthetic latent vector 122 and the extracted noise vector 121 into the score predictor 43 to predict the score. And, the generation system 10 may update the noise vector 121 using the predicted score (e.g., by performing a Reverse SDE process), thereby generating a synthetic latent vector 123 at the 't'-th time point.

Next, when T synthetic latent vectors 116 are generated, the generation system 10 may reconstruct the T synthetic latent vectors 116 into T latent time series samples 117 through the trained decoder 42 and output them.

So far, a method for generating time series data according to some embodiments of the present disclosure has been described with reference to FIGS. 6 to 12. According to the above, a score-based generative model may be configured to include an autoencoder (*see* 41, 42) and a score predictor (43). Then, the score predictor 43 may be trained using the latent vectors of the original time series data generated through the trained encoder 41, and a synthetic latent vector may be generated from the noise vector using the trained score predictor 43, and the synthetic latent vector may be reconstructed into a synthetic time series sample through the trained decoder 42. In this case, because the score-based sampling process is performed in a latent space that well reflects the characteristics of the original time series data, high-quality synthetic time series data may be generated. In addition, since a synthetic latent vector that well reflects the characteristics of the original time series data is generated based on the score in a low-dimensional latent space and decoded to generate a high-dimensional synthetic time series sample, even if the number of the dimensions of each time series sample constituting the original time series data increases, the impact on the quality of synthetic time series data may be minimal. Furthermore, computing costs and time costs required for training the score predictor 43 may also be reduced.

Additionally, the score predictor 43 may be configured to further receive a latent vector at a previous time point and predict the score (i.e., conditional score) for the latent vector at the current time point. And, when generating a synthetic latent vector at the current time point, the score of the noise (or noisy) vector at the current time point with respect to the synthetic latent vector at the previous time point may be used. In this case, since the score may be predicted by reflecting the characteristics of the time series data (i.e., relationship with data at a previous time point), the performance (i.e., prediction accuracy) of the score predictor 43 may be further improved, and as a result, the quality of synthetic time series data may be further improved.

Meanwhile, the time series data generation method described so far may be applied to general sequence data without changing the actual technical idea. For example, the generation system 10 may generate synthetic sequence data having similar characteristics to the original sequence data using the above-described method.

Hereinafter, the performance test results for the above-described time series data generation method will be briefly described.

The present inventors conducted an experiment to verify the performance of the above-described time series data generation method (hereinafter referred to as the 'proposed method'). Specifically, the present inventors conducted three experiments to determine how similar the synthetic time series data generated by the proposed method is to the original time series data.

First, the present inventors conducted an experiment, in which a model that predicts the sample at the next time point using synthetic time series data (i.e., a model that receives t-1 samples at previous time points and predicts the sample at the t-th time point) is trained, and the sample at the next time point of the original time series data is predicted using the trained model, and then the prediction error is measured based on the mean absolute error (MAE). These experiments were conducted on four time series datasets related to stocks, energy, air, and occupancy, and the same experiments were conducted on TimeGAN and TimeVAE to compare performance. Among the four time series datasets, datasets related to energy, air, and occupancy are published in the 'UCI machine learning repository,' and datasets related to stocks are published in TimeGAN's github.

Second, the present inventors conducted an experiment, in which the original time series data and the synthetic time series data are used to train a model that discriminates between the original sample and the synthetic sample, and a portion of the original time series data and the synthetic time series data are selected as test data to measure performance (i.e., accuracy) of the trained model. Like the first experiment, this experiment was also conducted on four time series datasets, and the same experiment was conducted on TimeGAN and TimeVAE.

Third, the present inventors conducted an experiment to compare the distribution of original time series data and synthetic time series data using the t-SNE technique. Like the first experiment, this experiment was also conducted on four time series datasets, and the same experiment was conducted on TimeGAN and TimeVAE.

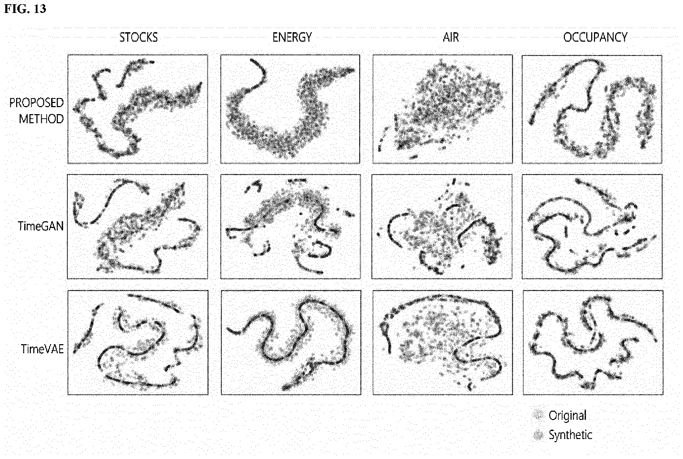

The results of the first and second experiments are listed in Table 1 below, and the results of the third experiment are shown in FIG. 13.

[Table 1]

| Category | | Stocks | Energy | Air | Occupancy |
|---|---|---|---|---|---|
| Prediction error | TimeGAN | 0.102 | 0.236 | 0.447 | 0.365 |
| | TimeVAE | 0.175 | 0.498 | 0.381 | 0.415 |
| | Proposed method | 0.021 | 0.198 | 0.127 | 0.414 |
| Discrimination accuracy | TimeGAN | 0.038 | 0.273 | 0.017 | 0.057 |
| | TimeVAE | 0.042 | 0.268 | 0.013 | 0.035 |
| | Proposed method | 0.037 | 0.252 | 0.005 | 0.022 |

Referring to Table 1, it may be seen that the prediction error of the proposed method is much smaller than that of TimeGAN and TimeVAE for most time series datasets. A small prediction error means that the characteristics of the training data (i.e., synthetic time series data) are similar to the test data (i.e., original time series data). This confirms that the performance of the proposed method exceeds TimeGAN and TimeVAE. In other words, it may be confirmed that the quality of the synthetic time series data generated through the proposed method is superior to that generated through TimeGAN and TimeVAE.

Next, it may be seen that the discrimination accuracy of the proposed method is lower than that of TimeGAN and TimeVAE for most time series datasets. Low discrimination accuracy means that the characteristics of the training data (i.e., synthetic time series data) are similar to the test data (i.e., original time series data) (i.e., discrimination is difficult), and this also means that the performance of the proposed method is superior to that of TimeGAN and TimeVAE.

Next, referring to FIG. 13, it may be seen that the distribution of the synthetic time series data generated through the proposed method is quite similar to the original time series data. On the other hand, it may be seen that the distribution of synthetic time series data generated through TimeGAN or TimeVAE is quite different from the original time series data. Through this, it may be intuitively confirmed that the characteristics of the original time series data remain intact in the synthetic time series data generated through the proposed method and that the performance of the proposed method significantly exceeds TimeGAN and TimeVAE.

So far, the performance test results for the above-described time series data generation method have been briefly described with reference to Table 1 and FIG. 13. Hereinafter, an example computing device 140 capable of implementing the generation system 10 according to some embodiments of the present disclosure will be described with reference to FIG. 14.

FIG. 14 is an example hardware configuration diagram showing the computing device 140.

As shown in FIG. 14, the computing device 140 may comprise one or more processors 141, a bus 143, a communication interface 144, a memory 142 that loads a computer program 146 performed by the processor 141, and a storage 145 that stores a computer program 146. However, only components related to the embodiment of the present disclosure are shown in FIG. 14. Accordingly, a person skilled in the art to which this disclosure pertains may recognize that other general-purpose components may be included in addition to the components shown in FIG. 14. That is, the computing device 140 may further include various components in addition to those shown in FIG. 14. Additionally, in some cases, the computing device 140 may be configured with some of the components shown in FIG. 14 omitted. Hereinafter, each component of the computing device 140 will be described.

The processor 141 may control the overall operation of each component of the computing device 140. The processor 141 may comprise at least one of a Central Processing Unit (CPU), Micro Processor Unit (MPU), Micro Controller Unit (MCU), Graphic Processing Unit (GPU), or any type of processor well known in the art of the present disclosure. Additionally, the processor 141 may perform operations on at least one application or program to execute operations/methods according to embodiments of the present disclosure. The computing device 140 may comprise one or more processors.

Next, the memory 142 may store various data, commands and/or information. The memory 142 may load a computer program 146 from a storage 145 to execute operations/methods according to embodiments of the present disclosure. The memory 142 may be implemented as a volatile memory such as RAM, but the technical scope of the present disclosure is not limited thereto.

Next, the bus 143 may provide communication functionality between components of the computing device 140. The bus 143 may be implemented as various types of buses, such as an address bus, a data bus, and a control bus.

Next, the communication interface 144 may support wired and wireless internet communication of the computing device 140. Additionally, the communication interface 144 may support various communication methods other than internet communication. To this end, the communication interface 144 may be configured to comprise a communication module well known in the technical field of the present disclosure. In some cases, the communication interface 144 may be omitted.

Next, the storage 145 may non-transitory store one or more computer programs 146. The storage 145 may comprise a non-volatile memory such as Read Only Memory (ROM), Erasable Programmable ROM (EPROM), Electrically Erasable Programmable ROM (EEPROM), flash memory, a hard disk, a removable disk, or an any known type of computer-readable recording medium well known in the art to which this disclosure pertains.

Next, the computer program 146 may include one or more instructions that, when loaded into the memory 142, cause the processor 141 to perform operations/methods according to various embodiments of the present disclosure. That is, the processor 141 may perform operations/methods according to various embodiments of the present disclosure by executing one or more instructions loaded in the memory 142. For example, the computer program 146 may comprise instructions for performing operation comprising obtaining an autoencoder trained using original time series data, where the autoencoder includes an encoder and a decoder, obtaining a score predictor trained using latent vectors of original time series data generated through the encoder, extracting a plurality of noise vectors from a prior distribution, generating a plurality of synthetic latent vectors by updating the plurality of noise vectors using scores of the plurality of noise vectors predicted through the score predictor, and reconstructing the plurality of synthetic latent vectors into a plurality of synthetic time series samples through the decoder and outputting them. In this case, the generation system 10 according to some embodiments of the present disclosure may be implemented through the computing device 140.

Meanwhile, in some embodiments, the computing device 140 shown in FIG. 14 may mean a virtual machine implemented based on cloud technology. For example, the computing device 140 may be a virtual machine running on one or more physical servers included in a server farm. In this case, at least some of the processor 141, memory 142, and storage 145 shown in FIG. 14 may be virtual hardware, and the communication interface 144 also may be implemented as a virtualized networking element such as a virtual switch, etc.

So far, an example computing device 140 capable of implementing the generation system 10 according to some embodiments of the present disclosure has been described with reference to FIG. 14.

Hereinabove, various example embodiments of the present disclosure and effects according to the example embodiments have been described with reference to FIGS. 1 to 14.

According to some embodiments of the present disclosure, a score-based generative model may be configured to comprise an autoencoder and a score predictor/estimator. Then, the score predictor is trained using latent vectors of the original time series data generated through an encoder (i.e., trained encoder), and a synthetic latent vector is generated from the noise vector using the trained score predictor. And, the synthetic latent vector may be reconstructed into a synthetic time series sample through the trained decoder. In this case, because the score-based sampling process is performed in a latent space that well reflects the characteristics of the original time series data, high-quality synthetic time series data may be generated. In addition, since a synthetic latent vector that well reflects the characteristics of the original time series data is generated based on the score in a low-dimensional latent space and decoded to generate a high-dimensional synthetic time series sample, even if the number of the dimensions of each time series sample constituting the original time series data increases, the impact on the quality of synthetic time series data may be minimal. Furthermore, the computing and time costs required for training the score predictor may also be reduced.

Additionally, the score predictor may be configured to further receive latent vectors at a previous time point and predict the score (i.e., conditional score) for the latent vector at the current time point. And, when generating a synthetic latent vector at the current time point, the score of the noise (or noisy) vector at the current time point with respect to the synthetic latent vector at the previous time point may be used. In this case, because the score may be predicted by reflecting the characteristics of the time series data (i.e., relationship with data at a previous time point), the performance (i.e., accuracy) of the score predictor may be further improved, in resulting that the quality of synthetic time series data be further improved.

Further, by training the score predictor using a loss function (or objective function) suitable for time series data, the performance (i.e., accuracy) of the score predictor may be further improved (see Equation 3).

Further, by using synthetic time series data for information protection purposes, information security in various fields that deal with time series data may be improved.

The effects according to the technical idea of the present disclosure are not limited to the effects mentioned above, and other effects not mentioned may be clearly understood by those skilled in the art from the description below.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications may be made to the example embodiments without substantially departing from the principles of the present disclosure. Therefore, the disclosed example embodiments of the disclosure are used in a generic and descriptive sense only and not for purposes of limitation.

**Claims**

1. A method for generating time series data, performed by at least one computing device, the method comprising:

obtaining an autoencoder trained using original time series data, wherein the autoencoder includes an encoder and a decoder;

obtaining a score predictor trained using latent vectors of original time series data generated through the encoder;

extracting a plurality of noise vectors from a prior distribution;

generating a plurality of synthetic latent vectors by updating the plurality of noise vectors using scores of the plurality of noise vectors predicted through the score predictor; and

reconstructing the plurality of synthetic latent vectors into a plurality of synthetic time series samples through the decoder and outputting the plurality of synthetic time series samples.

2. The method of claim 1, wherein the score predictor is configured to further receive a latent vector at a previous time point in addition to a latent vector at a current time point and predict a score for the latent vector at the current time point.

3. The method of claim 2, wherein the generating the plurality of synthetic latent vectors comprises:

updating a first noise vector to generate a first synthetic latent vector, wherein the first synthetic latent vector is a vector at a time point before a second synthetic latent vector;

inputting a second noise vector and the first synthetic latent vector into the score predictor to predict a score of the second noise vector; and

generating the second synthetic latent vector by updating the second noise vector based on the score of the second noise vector.

4. The method of claim 1, wherein the score predictor is trained based on a difference between a predicted score for noisy vectors generated by adding noise to the latent vectors and a value calculated by Equation 1 below,

[Equation 1]

$$\nabla_{h_t^s} log p(h_t^s | h_t^0)$$

wherein $h_t^0$ means a latent vector at a t-th time point, $h_t^s$ means a noise vector generated by adding noise to the latent vector at the t-th time point, $log p(h_t^s | h_t^0)$ means a log probability density of $h_t^s$ for $h_t^0$ , and $\nabla_{h_t^s}$ means a gradient.

5. The method of claim 1, wherein the encoder or the decoder is implemented as a RNN (Recurrent Neural Network)-based neural network.

6. The method of claim 1, wherein the encoder or the decoder is implemented as a transformer-based neural network.

7. The method of claim 1, wherein the score predictor is implemented as a CNN (Convolutional Neural Network)-based neural network performing an 1D convolution operation.

8. The method of claim 7, wherein the score predictor is implemented based on a neural network of a U-Net structure.

9. The method of claim 1, wherein the original time series data comprises real-world data,
the method further comprises:
replacing the real-world data with the plurality of synthetic time series samples or transforming the real-world data using the plurality of synthetic time series samples.

10. A system for generating time series data comprising:

on or more processors; and
a memory configured to store one or more instructions,
wherein the one or more processors, by executing the stored one or more instructions, perform operations comprising:

obtaining an autoencoder trained using original time series data, wherein the autoencoder includes an encoder and a decoder;
obtaining a score predictor trained using latent vectors of original time series data generated through the encoder;
extracting a plurality of noise vectors from a prior distribution;
generating a plurality of synthetic latent vectors by updating the plurality of noise vectors using scores of the plurality of noise vectors predicted through the score predictor; and
reconstructing the plurality of synthetic latent vectors into a plurality of synthetic time series samples through the decoder and outputting the plurality of synthetic time series samples.

11. The system of claim 10, wherein the score predictor is configured to further receive a latent vector at a previous time point in addition to a latent vector at a current time point and predict a score for the latent vector at the current time point.

12. The system of claim 11, wherein the generating the plurality of latent potential vectors comprises:

updating a first noise vector to generate a first synthetic latent vector, wherein the first synthetic latent vector is a vector at a time point before a second synthetic latent vector;
inputting a second noise vector and the first synthetic latent vector into the score predictor to predict a score of the second noise vector; and
generating the second synthetic latent vector by updating the second noise vector based on the score of the second noise vector.

13. The system of claim 10, wherein the score predictor is trained based on a difference between a predicted score for noisy vectors generated by adding noise to the latent vectors and a value calculated by Equation 1 below,

[Equation 1]

$$\nabla_{h_t^s} log p(h_t^s | h_t^0)$$

wherein $h_t^0$ means a latent vector at a t-th time point, $h_t^s$ means a noise vector generated by adding noise to the latent vector at the t-th time point, $log p(h_t^s | h_t^0)$ means a log probability density of $h_t^s$ for $h_t^0$, and $\nabla_{h_t^s}$ means a gradient.

14. The system of claim 10, wherein the original time series data comprises real-world data,
the operations further comprise:
replacing the real-world data with the plurality of synthetic time series samples or transforming the real-world data using the plurality of synthetic time series samples.

15. A non-transitory computer readable reading medium storing a computer program executable by at least one processor to perform:

obtaining an autoencoder trained using original time series data, wherein the autoencoder includes an encoder and a decoder;
obtaining a score predictor trained using latent vectors of original time series data generated through the encoder;
extracting a plurality of noise vectors from a prior distribution;
generating a plurality of synthetic latent vectors by updating the plurality of noise vectors using scores of the plurality of noise vectors predicted through the score predictor; and
reconstructing the plurality of synthetic latent vectors into a plurality of synthetic time series samples through the decoder and outputting the plurality of synthetic time series samples.

**FIG. 1**

**FIG. 2**

**FIG. 3**

x(0) ──────→ FORWARD SDE ──────→ x(S)

x(s)

ORIGINAL SAMPLE          NOISY SAMPLE          NOISE SAMPLE

x(0) ←────── REVERSE SDE ←────── x(S)

SCORE
$\nabla_x \log p_s(x)$

**FIG. 4**

**FIG. 5**

**FIG. 6**

```
          ┌─────────────────┐
          │      START      │
          └─────────────────┘
                   │
                   ▼
  ┌─────────────────────────────────────┐
  │     TRAIN AUTOENCODER USING         │  ~S61
  │     ORIGINAL TIME SERIES DATA       │
  └─────────────────────────────────────┘
                   │
                   ▼
  ┌─────────────────────────────────────┐
  │  TRAIN SCORE PREDICTOR USING LATENT │
  │  VECTOR OF ORIGINAL TIME SERIES     │  ~S62
  │  DATA GENERATED THROUGH TRAINED     │
  │  ENCODER                            │
  └─────────────────────────────────────┘
                   │
                   ▼
  ┌─────────────────────────────────────┐
  │ GENERATE SYNTHETIC TIME SERIES DATA │
  │ FROM NOISE SAMPLES USING TRAINED    │  ~S63
  │ SCORE PREDICTOR                     │
  └─────────────────────────────────────┘
                   │
                   ▼
          ┌─────────────────┐
          │       END       │
          └─────────────────┘
```

**FIG. 7**

**FIG. 8**

S62

```
CONVERT T TIME SERIES SAMPLES INTO T      S81
LATENT VECTORS USING TRAINED ENCODER
```

```
GENERATE NOISY VECTOR BY ADDING           S82
NOISE TO EACH LATENT VECTOR
```

```
PREDICT SCORE OF NOISY VECTOR AT CURRENT
TIME POINT (t) FOR LATENT VECTOR AT PREVIOUS   S83
TIME POINT (t-1) THROUGH SCORE PREDICTOR
```

```
TRAIN SCORE PREDICTOR BASED ON LOSS VALUE
OF PREDICTICTED SCORE CALCULATED           S84
BY PREDEFINED LOSS FUNCTION
```

FIG. 9

CONTRACTING PATH

EXPANDING PATH

$h_{t-1}^0$

$h_t^s$

93

91

92

$\log p(h_t^s | h_{t-1}^0)$ (PREDICTED)

**FIG. 10**

S63

EXTRACT NOISE VECTOR FROM
PRIOR DISTRIBUTION — S101

PREDICT SCORE OF NOISE VECTOR AT
CURRENT TIME POINT (t) WITH RESPECT TO
SYNTHETIC LATENT VECTOR AT PREVIOUS TIME
POINT (t-1) USING TRAINED SCORE PREDICTOR — S102

GENERATE SYNTHETIC LATENT VECTOR
AT CURRENT TIME POINT (t) BY UPDATING
NOISE VECTOR USING PREDICTED SCORE — S103

S104
No — WHETHER T SYNTHETIC LATENT
VECTORS ARE GENERATED?

Yes

RECONSTRUCT T SYNTHETIC LATENT VECTORS
INTO T LATENT TIME SERIES SAMPLES THROUGH
TRAINED DECODER AND OUTPUT THEM — S105

**FIG. 11**

FIG. 12

FIG. 13

FIG. 14

140

141 PROCESSOR

143

144 COMMUNICATION INTERFACE

142 MEMORY

COMPUTER PROGRAM

146

B U S

145 STORAGE

COMPUTER PROGRAM

146

Europäisches
Patentamt

European
Patent Office

Office européen
des brevets

# EUROPEAN SEARCH REPORT

Application Number

EP 23 20 9679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J. JEON ET AL: "GT-GAN: general purpose time series synthesis with generative adversarial networks", ARXIV.ORG, CORNELL UNIVERSITY LIBRARY, 201 OLIN LIBRARY CORNELL UNIVERSITY ITHACA, NY 14853, 5 October 2022 (2022-10-05), XP091334824, DOI: 10.48550/arXiv.2210.02040 * sections 1-3 * | 1-15 | INV. G06N3/0455 G06N3/088 G06N3/084 G06N3/0475 ADD. G06N3/0442 G06N3/0464 |
| X | H. PEI ET AL: "Towards generating real-world time series data", PROCEEDINGS OF THE 2021 IEEE INTERNATIONAL CONFERENCE ON DATA MINING (ICDM'21), 7 December 2021 (2021-12-07), pages 469-478, XP034045027, DOI: 10.1109/ICDM51629.2021.00058 * sections III and IV * | 1-15 | |
| X | C. A. GARCIA ET AL: "Stochastic embeddings of dynamical phenomena through variational autoencoders", ARXIV.ORG, CORNELL UNIVERSITY LIBRARY, 201 OLIN LIBRARY CORNELL UNIVERSITY ITHACA, NY 14853, 13 October 2020 (2020-10-13), XP081785242, DOI: 10.48550/arXiv.2010.06265 * sections 1 and 2 * | 1-15 | TECHNICAL FIELDS SEARCHED (IPC) G06N |
| X | Z. Chen: "Dual reparametrized variational generative model for time-series forecasting", arXiv:2203.05766v1, 11 March 2022 (2022-03-11), XP093156659, DOI: 10.48550/arxiv.2203.05766 Retrieved from the Internet: URL:https://arxiv.org/abs/2203.05766v1 [retrieved on 2024-04-24] * sections 1-3 * | 1-15 | |

The present search report has been drawn up for all claims

| Place of search | Date of completion of the search | Examiner |
|---|---|---|
| The Hague | 27 April 2024 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)